Europäisches Patentamt

European Patent Office

Office européen des brevets

(11) Veröffentlichungsnummer: **0 047 728**
**B1**

(12) **EUROPÄISCHE PATENTSCHRIFT**

(45) Veröffentlichungstag der Patentschrift :
**16.11.83**

(21) Anmeldenummer : **81890134.0**

(22) Anmeldetag : **30.07.81**

(51) Int. Cl.³ : **C 04 B 35/66, C 04 B 35/02,**
**B 22 D 11/10, F 27 D 1/16**

(54) **Feuerfeste, asbestfreie, isolierende Spritzmasse.**

(30) Priorität : **09.09.80 AT 4526/80**

(43) Veröffentlichungstag der Anmeldung :
**17.03.82 Patentblatt 82/11**

(45) Bekanntmachung des Hinweises auf die Patenterteilung : **16.11.83 Patentblatt 83/46**

(84) Benannte Vertragsstaaten :
**BE CH DE FR GB IT LI LU NL SE**

(56) Entgegenhaltungen :
**DE A 2 520 993**
**DE B 2 800 988**
**FR A 1 284 816**
**FR A 1 463 895**

(73) Patentinhaber : **Österreichisch-Amerikanische**
**Magnesit Aktiengesellschaft**
**A-9545 Radenthein(Kärnten) (AT)**

(72) Erfinder : **Siegl, Walter, Dipl.-Ing.**
**Dr. Semmelweis-Strasse 16**
**A-9500 Villach (AT)**

(74) Vertreter : **Leeb, Walther Dr.**
**Liniengasse 2a**
**A-1060 Wien (AT)**

# 0 047 728

## Feuerfeste, asbestfreie, isolierende Spritzmasse

Die Erfindung betrifft eine feuerfeste, asbestfreie, isolierende Spritzmasse auf der Grundlage von basischem, feuerfestem Material, insbesondere für Zwischenbehälter beim Stranggußverfahren.

Bei der Stahlerzeugung hat in den letzten Jahren das Stranggußverfahren, bei dem flüssiger Stahl aus einer Pfanne in einen Zwischenbehälter (Verteilergefäß, Tundish) und von diesem dann in eine Kokille gegossen wird, erhöhte Bedeutung erlangt. Der Aufbau des innerhalb des Dauerfutters angeordneten feuerfesten Verschleißfutters dieser Zwischenbehälter kann mit nicht-basischen Steinen, großformatigen, wärmeisolierenden Platten und vorgegossenen Blöcken oder mit basischen Steinen erfolgen. In neuerer Zeit wird das Verschleißfutter dieser Zwischenbehälter häufig auf die Weise ausgebildet, daß auf das Dauerfutter Schutzanstriche oder Isolierplatten, die meist aus basischen Stoffen aufgebaut sind, aufgebracht werden. Beim sogenannten Kalttundishverfahren werden isolierende, meist harzgebundene Platten vor das Dauerfutter gemauert, und das Zwischengefäß wird ohne Aufheizen in Betrieb genommen. Eine solche Zustellung mit Platten ist jedoch kompliziert und teuer. Bei dem als Heißtundishverfahren bezeichneten Verfahren wird das Dauerfutter des Zwischengefäßes aus feuerfesten Steinen oder Stampfmassen mit Hilfe einer basischen Spritzmasse mit einem Überzug versehen und dann vor der Inbetriebnahme auf eine Temperatur von über 1 000 °C aufgeheizt. Der Nachteil dieses Verfahrens liegt darin, daß das Aufheizen des Tundish auf über 1 000 °C beträchtliche Kosten verursacht.

Die Erfindung zielt nun darauf ab, die Möglichkeit zu schaffen, ganz allgemein metallurgische Öfen und Gefäße bzw. Behälter aller Art, in welchen eine Isolierwirkung erwünscht ist, insbesondere aber Zwischenbehälter für das Stranggußverfahren, auf einfache Weise mit einem als Verschleißfutter dienenden wärmeisolierenden Überzug zu versehen, der billiger kommt als eine Auskleidung mit feuerfesten Steinen, mit feuerfesten Isolierplatten oder mit einer Spritzmasse nach dem Heißtundishverfahren und dabei von Asbest, gegen dessen Verwendung in medizinischer Hinsicht Bedenken bestehen, frei ist. Es wurde gefunden, daß dies mit Hilfe einer Spritzmasse möglich ist, die durch einen besonderen Zusatz eine gute Isolierwirkung aufweist. Demnach betrifft die Erfindung eine feuerfeste, asbestfreie, isolierende Spritzmasse auf der Grundlage von basischem, feuerfestem Material, insbesondere für Zwischenbehälter beim Stranggußverfahren, welche dadurch gekennzeichnet ist, daß sie aus 75 bis 95 Gew.-% Magnesia, Magnesitchrom, Chrommagnesit oder Olivin bzw. Forsterit als feuerfestem Material, 3 bis 20 Gew.-%, vorzugsweise 3 bis 12 Gew.-%, expandiertem Perlit, 0,5 bis 5 Gew.-% Bindemittel und 0,1 bis 5 Gew.-% Plastifizierungsmittel aufgebaut ist.

Die Anwendung der Spritzmasse gemäß der Erfindung bei einem Zwischenbehälter für das Stranggußverfahren erfolgt am besten auf die Weise, daß das Zwischengefäß in noch warmem oder heißem Zustand, d. h. am besten bei einer Temperatur von über 200 oder 300 °C oder noch darüber, sogleich nach dem Entleeren des Stahls mit der Spritzmasse gespritzt wird. Das Gefäß kann dann, sobald die Spritzmasse vollkommen getrocknet ist — zum Verspritzen ist es erforderlich, der Masse Wasser zuzusetzen, und dieser Wasserzusatz erfolgt zweckmäßig erst am Ende der Lanze bzw. Spritzvorrichtung, mit der die Masse verspritzt wird —, ohne Vorwärmung in Betrieb genommen werden. Bei Verwendung der erfindungsgemäßen Spritzmasse für solche Zwischenbehälter ergeben sich die Vorteile, daß hohe Aufheizkosten entfallen, das Aufbringen der Spritzmasse billiger als jede andere Zustellungsart ist, und schließlich eine nachteilige Abkühlung des Stahles am Gießbeginn vermieden wird.

Am günstigsten ist es, wenn in der gegenständlichen Spritzmasse das feuerfeste Material und der expandierte Perlit eine Korngröße von 0 bis 3 mm aufweisen, doch kann ohne weiteres Korn bis zu einer Größe von 4 mm mit Erfolg verwendet werden. Bei noch höheren Korngrößen werden die Ergebnisse schlechter.

Die Spritzmasse gemäß der Erfindung kann als Bindemittel zweckmäßig Wasserglas, Magnesiumsulfat, Natriumhydrogensulfat oder Phosphate, wie Natriummetaphosphat oder Natriumpolyphosphat, enthalten, und als Plastifizierungsmittel sind insbesondere Ton, Bentonit oder ein Cellulosederivat, wie Methylcellulose, Hydroxyäthylcellulose oder Natriumcarboxymethylcellulose, geeignet. Es ist jedoch auch eine Verwendung anderer Bindemittel und Plastifizierungsmittel möglich.

In der erfindungsgemäßen Spritzmasse können ferner 0,5 bis 10 Gew.-% des feuerfesten Materials durch ein Fasermaterial, insbesondere Glas- oder Mineralwolle, einer Länge von 1 bis 10 mm, vorzugsweise bis zu 3 mm, ersetzt sein. Nach den bisher vorliegenden Versuchsergebnissen bringt die Verwendung eines solchen Fasermaterials aber keine wesentlichen Vorteile mit sich.

Die Erfindung wird an Hand der folgenden Beispiele näher erläutert. Die in diesen Beispielen angeführten Prüfwerte (Raumgewicht, Porosität und Wärmeleitfähigkeit) wurden auf folgende Weise bestimmt :

Die in den einzelnen Beispielen jeweils angeführten Stoffe wurden unter Zusatz von Wasser gründlich miteinander vermischt und unter einem Druck von 4,9 N/mm² zu Prüfzylindern mit 50 mm Durchmesser und 50 mm Höhe verpreßt, die dann 2 h lang bei einer Temperatur von 1 500 °C gebrannt wurden. Die Messungen erfolgten nach Abkühlen der Zylinder auf Raumtemperatur.

Alle Prozentangaben beziehen sich, wenn nicht, wie bei der Porosität, ausdrücklich anders vermerkt ist, auf Gewichtsprozente.

2

### Beispiel 1 bis 4

Als Ausgangsstoffe wurden ein Sintermaterial aus Magnesitchrom, Perlit, Wasserglas und Ton verwendet. Das Sintermaterial und der Perlit hatten folgende Zusammensetzung :

|  | $SiO_2$ | $Fe_2O_3$ | $Al_2O_3$ | $Cr_2O_3$ | CaO | MgO | Alkalien |
|---|---|---|---|---|---|---|---|
| Magnesitchrom, % | 3,0 | 6,7 | 2,8 | 9,5 | 2,6 | 75,4 | |
| Perlit, % | 75,3 | 0,73 | 12,82 | | 0,52 | 0,10 | 8 |

Das Wasserglas enthielt 64 % $SiO_2$, 19 % $Na_2O$ und 17 % $H_2O$, der Ton 48 % $SiO_2$ und 32 % $Al_2O_3$, Glühverlust 12 %.

Das Sintermaterial aus Magnesitchrom wurde in einer Korngröße von 0 bis 3 mm (35 bis 40 % 0-0,3 mm, über 45 % über 1 mm, Rest 0,3-1 mm), der Perlit in einer Korngröße von 0 bis 3 mm verwendet, der Ton war zu 80 % unter 0,06 mm.

Aus den angeführten Ausgangsstoffen wurden fünf Mischungen hergestellt, u. zw. eine nur Vergleichszwecken dienende Mischung ohne Zusatz von Perlit (Vergleichsversuch), und weitere vier Mischungen mit steigenden Zusätzen von Perlit (Beispiel 1 bis 4). Diese Mischungen wurden nach Zusatz von Wasser (Vergleichsversuch und Beispiel 1 je 5 % Wasser, Beispiel 2 6 % Wasser, Beispiel 3 8 % und Beispiel 4 11 % Wasser) zu Zylindern verpreßt. Die Zusammensetzung der einzelnen Mischungen und die erhaltenen Prüfwerte sind aus der folgenden Tabelle ersichtlich :

| Beispiel : | Vergleichsversuch | 1 | 2 | 3 | 4 |
|---|---|---|---|---|---|
| Magnesitchrom, % | 95 | 92 | 90 | 87 | 84 |
| Perlit, % | 0 | 3 | 5 | 8 | 11 |
| Wasserglas, % | 3 | 3 | 3 | 3 | 3 |
| Ton, % | 2 | 2 | 2 | 2 | 2 |
| Raumgewicht, $g/cm^3$ | 2,4 | 2,0 | 1,85 | 1,65 | 1,45 |
| Porosität, Vol.-% | 38 | 44 | 48 | 53 | 58 |
| Wärmeleitfähigkeit, W/mK | 0,7 | 0,6 | 0,5 | 0,4 | 0,3 |

Die Prüfwerte zeigen, daß alle angeführten Eigenschaften bei steigendem Perlitgehalt verbessert werden. Praktisch die gleichen Ergebnisse werden erhalten, wenn als Bindemittel 2, 4 oder 5 % Wasserglas, oder statt des angeführten neutralen, wasserhaltigen Wasserglases ein neutrales, wasserfreies oder ein alkalisches Wasserglas, kalzinierter Kieserit, also Magnesiumsulfat (98 % $MgSO_4$, 0,7 % Wasser ; Körnung 20 % 0-0,25 mm, 60 % 0,25 bis 0,5 mm, 20 % 0,5 bis 1 mm), oder ein Natriummetaphosphat (68,5 % $P_2O_5$, 31,3 % $Na_2O$ ; 66 % unter 0,06 mm) verwendet wird.

### Beispiel 5 und 6

Für die Durchführung dieser Beispiele wurden zwei Magnesiasinter (Sinter A und Sinter B) folgender Zusammensetzung benutzt :

|  | $SiO_2$ | $Fe_2O_3$ | $Al_2O_3$ | $Cr_2O_3$ | CaO | MgO |
|---|---|---|---|---|---|---|
| Magnesiasinter A, % | 1,6 | 5,0 | 0,8 | 0,4 | 5,5 | 86,7 |
| Magnesiasinter B, % | 5,8 | 0,4 | 0,2 | 0 | 3,2 | 90,4 |

Dieses Sintermaterial wurde in einer Korngröße von 0 bis 3 mm (35 bis 40 % 0-0,3 mm, über 45 % über 1 mm, Rest 0,3 bis 1 mm) mit Perlit der für Beispiel 1 bis 4 angeführten Zusammensetzung und Korngröße, dem Bindemittel und Plastifizierungsmittel zum Aufbau von Mischungen verwendet. Das im Falle von Beispiel 5 als Bindemittel benutzte Natriummetaphosphat und das in Beispiel 6 angeführte Wasserglas und der als Plastifizierungsmittel dienende Ton waren die in Beispiel 1 bis 4 erwähnten Stoffe ; die Methylcellulose hatte einen Aktivgehalt von über 93 %, einen Feuchtigkeitsgehalt von 5 %, Viskositätsstufe 6 000, Korngröße über 60 % unter 0,1 mm. Die Mischung von Beispiel 5 wurde mit 8 %, die von Beispiel 6 mit 6 % Wasser zu Zylindern verpreßt. Die Zusammensetzung der Mischungen und die erhaltenen Prüfdaten waren wie folgt :

| Beispiel : | 5 | 6 |
|---|---|---|
| Magnesiasinter A, % | 89,8 | |
| Magnesiasinter B, % | | 90 |
| Perlit, % | 8 | 5 |
| Natriummetaphosphat, % | 2 | |
| Wasserglas, % | | 3 |
| Methylcellulose, % | 0,2 | |
| Ton, % | | 2 |
| Raumgewicht, g/cm³ | 1,67 | 1,79 |
| Porosität, Vol.-% | 51,5 | 49,0 |
| Wärmeleitfähigkeit W/mK | 0,43 | 0,50 |

Die Ergebnisse sind praktisch die gleichen, wenn statt Methylcellulose 0,1 bis 0,2 % Natriumcarboxymethylcellulose oder Polyvinylalkohol, statt Ton Bentonit Verwendet wird.

Beispiel 7 und 8

Diese Beispiele betreffen Mischungen auf der Basis von Magnesitchrom und Olivin bzw. Forsterit. Als Magnesitchrom wurde das gemäß Beispiel 1 bis 4 benutzte Sintermaterial, ebenfalls in einer Korngröße von 0 bis 3 mm verwendet, und der Perlit, das Wasserglas, der Kieserit und Ton waren gleichfalls die in Beispiel 1 bis 4 erwähnten Stoffe. Der angeführte Magnesitchromsinter wurde bei Beispiel 7 zusammen mit Chromerzkonzentrat, bei Beispiel 8 zusammen mit gebranntem Olivin verwendet. Das Chromerzkonzentrat und der Olivin hatten folgende Analysen :

| | $SiO_2$ | $Fe_2O_3$ | $Al_2O_3$ | $Cr_2O_3$ | CaO | MgO |
|---|---|---|---|---|---|---|
| Chromerzkonzentrat (Transvaal), % | 1,0 | 29 | 15,5 | 46,5 | 0 | 8,0 |
| Olivin, % | 40,0 | 10,5 | 0,1 | 0,6 | 0,2 | 48,6 |

Die Siebanalyse des Chromerzkonzentrats und des gebrannten Olivins waren wie folgt :

| | 0-0,3 mm | 0,3-1 mm | über 1 mm |
|---|---|---|---|
| Chromerzkonzentrat, % | 28 | 70 | 2 |
| Olivin, % | 25-30 | 10-25 | mindestens 50 |

Aus diesen Stoffen wurden folgende Mischungen hergestellt, die unter Zusatz von 6 % (Beispiel 7) und 8 % (Beispiel 8) Wasser zu Zylindern verpreßt wurden und bei der Prüfung folgende Werte zeigten :

| Beispiel : | 7 | 8 |
|---|---|---|
| Magnesitchromsinter, 0,3-3 mm, % | 35 | |
| Magnesitchromsinter, 0-0,3 mm, % | 28 | 16 |
| Chromerzkonzentrat, % | 27 | |
| Olivin, 0-3 mm, % | | 71 |
| Perlit, % | 5 | 8 |
| Wasserglas, % | 1 | 3 |
| Kieserit, % | 2 | |
| Ton, % | 2 | 2 |
| Raumgewicht, g/cm³ | 2,15 | 1,40 |
| Porosität, Vol.-% | 46,5 | 54,0 |
| Wärmeleitfähigkeit, W/mK | 0,56 | 0,38 |

Beispiel 9

Dieses Beispiel bezieht sich auf eine Mischung mit einem Gehalt von 95 % feuerfestem Material, nämlich Magnesiasinter A der in Beispiel 5 und 6 angeführten Zusammensetzung, Korngröße (0 bis 3 mm) und Kornverteilung. Als Binde- und Plastifizierungsmittel dienten Natriummetaphosphat und Methylcellulose der gleichen Art wie in Beispiel 5 und 6. Die Mischung, die mit 5 % Wasser zu Zylindern verpreßt wurde, hatte folgende Zusammensetzung und ergab folgende Prüfwerte :

| | |
|---|---|
| Magnesiasinter A, % | 95 |
| Perlit, % | 3,5 |
| Natriummetaphosphat, % | 1,4 |
| Methylcellulose, % | 0,1 |
| Raumgewicht, $g/cm^3$ | 1,95 |
| Porosität, Vol.-% | 43,0 |
| Wärmeleitfähigkeit, W/mK | 0,6 |

Es kann abschließend erwähnt werden, daß ferner noch verschiedene Versuche durchgeführt wurden, bei welchen die in den Beispielen 1 bis 9 angeführten Mischungen jeweils immer hinsichtlich eines Parameters oder zweier Parameter geändert wurden.

So wurde bei den Beispielen 3, 4 und 8 der Gehalt an feuerfestem Material jeweils bis auf 75 % erniedrigt und dafür der Perlitgehalt bis auf 20 % erhöht, und bei Beispiel 5 wurde der Gehalt an Magnesiasinter A bis auf 77,8 % gesenkt und gleichzeitig der Perlitgehalt bis auf 20 % erhöht. Auch die auf. diese Weise zusammengesetzten Spritzmassen sind noch brauchbar.

Bei einer weiteren Variationsreihe wurden bei den Beispielen 1 bis 6 jeweils 0,5 bis 10 % des feuerfesten Materials durch Glasfasern ($SiO_2$ 54,4 %, $Fe_2O_3$ 0,7 %, $Al_2O_3$ 13,0 %, CaO 20,7 %, MgO 1,75 %, Alkalien 0,97 %, $B_2O_3$ 6,0 %) einer Länge von etwa 3 mm ersetzt. Die Prüfwerte der erhaltenen Prüfzylinder waren durchwegs betriedigend. Bei Verwendung von über 8 % Fasermaterial soll die Faserlänge in allen Fällen Höchstens 3 mm betragen.

Bei Verwendung des feuerfesten Materials in den Beispielen 5 bis 9 mit einer Korngröße von 0 bis 4 mm konnten gleichfalls zufriedenstellende Ergebnisse erhalten werden.

## Ansprüche

1. Feuerfeste, asbestfreie, isolierende Spritzmasse auf der Grundlage von basischem, feuerfestem Material, insbesondere für Zwischenbehälter (Tundish) beim Stranggußverfahren, dadurch gekennzeichnet, daß sie aus 75 bis 95 Gew.-% Magnesia, Magnesitchrom, Chrommagnesit oder Olivin bzw. Forsterit als feuerfestem Material, 3 bis 20 Gew.-%, vorzugsweise 3 bis 12 Gew.-%, expandiertem Perlit, 0,5 bis 5 Gew.-% Bindemittel und 0,1 bis 5 Gew.-% Plastifizierungsmittel aufgebaut ist.

2. Spritzmasse nach Anspruch 1, dadurch gekennzeichnet, daß das feuerfeste Material und der Perlit eine Korngröße bis 3 mm aufweisen.

3. Spritzmasse nach Anspruch 1 oder 2, dadurch gekennzeichnet, daß sie als Bindemittel Wasserglas, Magnesiumsulfat, Natriumhydrogensulfat oder Phosphate, wie Natriummetaphosphat oder Natriumpolyphosphat, enthält.

4. Spritzmasse nach einem der Ansprüche 1 bis 3, dadurch gekennzeichnet, daß sie als Plastifizierungsmittel Ton, Bentonit oder ein Cellulosederivat, wie Methylcellulose, Hydroxyäthylcellulose oder Natriumcarboxymethylcellulose, enthält.

5. Spritzmasse nach einem der Ansprüche 1 bis 4, dadurch gekennzeichnet, daß 0,5 bis 10 Gew.-% des feuerfesten Materials durch ein Fasermaterial, insbesondere Glas- oder Mineralwolle, einer Länge von 1 bis 10 mm, vorzugsweise bis zu 3 mm, ersetzt sind.

## Claims

1. Refractory, insulating gunning mix free of asbestos, on the base of basic, refractory material, particularly for tundishes in continuous casting, characterized in that it is composed of 75 to 95 % by weight of magnesia, magnesia-chrome, chrome-magnesia or olivine or forsterite respectively as refractory material, 3 to 20 % by weight, preferably 3 to 12 % weight, of expanded perlite, 0.5 to 5 % by weight of binding agent and 0.1 to 5 % by weight of plastifying agent.

2. Gunning mix according to claim 1, characterized in that the refractory material and the perlite have a grain size of up to 3 mm.

5

3. Gunning mix according to claim 1 or 2, characterized in that it contains sodium silicate, magnesium sulfate, sodium hydrogensulfate or phosphates, such as sodium metaphosphate or sodium polyphosphate, as binding agent.

4. Gunning mix according to any to claims 1 to 3, characterized in that it contains as plastifying agent clay, bentonite or a cellulose derivate, such as methyl cellulose, hydroxy ethylcellulose or sodium carboxymethylcellulose.

5. Gunning mix according to any of claims 1 to 4, characterized in that 0.5 to 10 % by weight of the refractory material are replaced by a fibre material, particularly glass or mineral wool, of a length of 1 to 10 mm, preferably up to 3 mm.

## Revendications

1. Masse isolante réfractaire à pulvériser, sans amiante, à base de matériau réfractaire basique, en particulier pour récipients intermédiaires (tundish) de coulées continue, caractérisée en ce qu'elle est composée de 75 à 95 % en poids de magnésie, de magnésite-chrome, de chrome-magnésite ou d'olivine ou forstérite en tant que matériau réfractaire, de 3 à 20 % en poids, préférablement de 3 à 12 % en poids, de perlite expansée, de 0,5 à 5 % en poids de liant et de 0,1 à 5 % en poids d'agent plastifiant.

2. Masse à pulvériser selon la revendication 1, caractérisée en ce que le matériau réfractaire et la perlite sont en grains de grosseur jusqu'à 3 mm.

3. Masse à pulvériser selon l'une des revendications 1 et 2, caractérisée en ce qu'elle contient, en tant que liant, du silicate de sodium, du sulfate de magnésium, du bisulfate de sodium ou des phosphates tels que métaphosphate de sodium ou polyphosphate de sodium.

4. Masse à pulvériser selon l'une des revendications 1 à 3, caractérisée en ce qu'elle contient, en tant qu'agent plastifiant, de l'argile, de la bentonite ou un dérivé cellulosique tel que méthylcellulose, hydroxyéthylcellulose ou carboxyméthylcellulose de sodium.

5. Masse à pulvériser selon l'une des revendications 1 à 4, caractérisée en ce que 0,5 à 10 % en poids du matériau réfractaire sont remplacés par un matériau fibreux, en particulier de la laine de verre ou minérale, dont la longueur des fibres est comprise entre 1 et 10 mm, de préférence jusqu'à 3 mm.